# EUROPÄISCHE PATENTSCHRIFT

(11) **EP 0 995 730 B1**
(45) Veröffentlichungstag und Bekanntmachung des Hinweises auf die Patenterteilung: **29.01.2003**
(21) Anmeldenummer: 99117815.3
(22) Anmeldetag: 09.09.1999
(51) Int. Cl.: C04B 35/573, C04B 35/628

(54) **Verfahren zur Herstellung silizierter Formkörper**
Method of making siliconized bodies
Procédé de fabrication de corps silicés

(30) Priorität: 14.10.1998 DE 19847358; 02.11.1998 DE 19850468
(43) Veröffentlichungstag der Anmeldung: 26.04.2000
(73) Patentinhaber: ECM Ingenieur-Unternehmen für Energie-und Umwelttechnik GmbH, 80339 München (DE)
(72) Erfinder: Papenburg, Ulrich, 85658 Egmating (DE); Pfrang, Wilhelm, 85354 Freising (DE); Goedtke, Peter, 81667 München (DE)
(74) Vertreter: Bohnenberger, Johannes, Dr.

(56) Entgegenhaltungen:
- WO-A-82/04248
- DE-A- 4 418 945

## Beschreibung

Die Erfindung betrifft ein Verfahren zur Herstellung silizierter Formkörper.

Aus der DE 42 07 009 ist ein Verfahren zur Herstellung von Leichtbau-Reflektoren bekannt, bei welchem ein Grünkörper aus einem faserigen Kohlenstoffmaterial bzw. kohlenstoffaserverstärktem Kohlenstoff mit einem Silizium-Waver belegt und in einen Tiegel mit Silizium gestellt wird. Nach dem Aufheizen im Vakuum über die Schmelztemperatur von Silizium hinaus steigt einerseits das schmelzflüssige Silizium aufgrund der Kapillarkräfte im Grünkörper hoch und wird andererseits der Silizium-Waver auf der Oberfläche des Grünkörpers festgeschmolzen. Hierbei findet auch gleichzeitig eine Reaktion zwischen dem Silizium und dem Kohlenstoff derart statt, daß Siliziumkarbid gebildet wird. Will man andere Strukturen als den dort beschriebenen Spiegel herstellen, so weist das Verfahren gewisse Nachteile auf. Insbesondere ergeben sich bei diesem Verfahren Inhomogenitäten in Bezug auf die Durchdringung des Grünkörpers mit Silizium, und zwar insbesondere in den Bereichen, in welchen der Grünkörper im Tiegel aufsteht.

Aus der DE 40 25 239 ist ein Verfahren zum Herstellen von Formkörpern aus siliziuminfiltriertem Siliziumkarbid bekannt, bei welchem poröse Formkörper aus Siliziumkarbid oder Siliziumkarbid/Kohlenstoff auf einen porösen Silizium/Siliziumkarbid-Träger aufgelegt werden, der mit seinem unteren Teil nach dem Aufheizen mit dem flüssigen Silizium in Kontakt steht. Dieser Körper wirkt dann wie ein Docht, der dem zu infiltrierenden Bauteil Silizium aus der Schmelze zuführt. Einerseits tritt auch hier das obengenannte Problem auf, daß die Auflageflächen des Formteils nur schwer von den Docht-Körpern zu lösen sind und andererseits eine gewisse Inhomogenität insbesondere kompliziert geformter Bauteile in Bezug auf die Durchtränkung mit Silizium festzustellen ist.

Aus der DE 44 18 945 ist ein Siliziumgranulat zum Silizieren von Bauteilen aus Kohlenstoff oder Siliziumkarbid/Kohlenstoff-Mischungen bekannt, wobei das Siliziumgranulat mit einem Bindemittel, welches Kohlenstoff und Bornitrit enthält, beschichtet und danach getrocknet wird. Der Grünkörper wird dann auf ein Bett derart beschichteten Siliziumgranulats aufgelegt, das sich wiederum auf einer Brennplatte befindet. Beim Aufheizen bildet der Kohlenstoff aus dem Bindemittel (bzw. der Kohlenstoff des Bindemittels) nach Reaktion mit dem Silizium zu Siliziumkarbid eine poröse "Schale" um die Silizium-Teilchen, durch welche das flüssige Silizium austreten und hinauf zum Grünkörper aufgrund der Kapillarkräfte zu dessen Infiltrierung steigen kann. Das Bornitrit wirkt hierbei derart, daß die Oberflächen der "Schalen" keine mechanisch feste Verbindung mit dem Silizium eingehen, der fertige Formkörper somit leicht von den Resten des Spendersiliziums bzw. den entsprechenden "Schalen" abtrennbar ist. Nachteilig ist an diesem bekannten Verfahren die Tatsache, daß wieder eine gewisse Inhomogenität der Durchdringung mit Silizium insbesondere bei kompliziert geformten Bauteilen feststellbar ist. Darüberhinaus ist bei diesen wie auch bei allen vorgenannten Verfahren eine maximale Steighöhe (ca. 250 mm) des Siliziums aufgrund der Kapillarkräfte möglich, was die Größe der zu silizierenden Formkörper begrenzt.

Der Erfindung liegt die Aufgabe zugrunde, ein Verfahren zur Herstellung silizierter Formkörper aufzuzeigen, das in einfacher und schonender Weise die Herstellung auch komplizierter, größerer Strukturen ermöglicht.

Diese Aufgabe wird durch ein Verfahren nach dem Patentanspruch 1 gelöst.

Ein wesentlicher Punkt der Erfindung liegt darin, daß Silizium nicht mehr aufgrund von Kapillarkräften direkt oder über einen Docht von unten nach oben in den Grünkörper aufsteigen muß, sondern vielmehr von oben nach unten in den Grünkörper "einsickern" kann, wobei natürlich die Kapillarkräfte innerhalb des porösen Grünkörpers für ein "Aufsaugen" und Verteilen des Siliziums sorgen.

Unter einfach ist hierbei auch zu verstehen, daß nur ein geringer Aufwand bei der Endbearbeitung zu betreiben ist. Unter "schonend" ist weiterhin zu verstehen, daß das Silizium im schmelzflüssigen Zustand nur langsam und allmählich in den Grünkörper eindringt. Dies ist nämlich insbesondere bei dickeren, massiven Bauteilen besonders vorteilhaft, da die Bildung von Siliziumkarbid eine exotherme Reaktion ist, die bei zu schnellem Ablaufen eine überstarke Aufheizung des Grünkörpers und gegebenenfalls auch thermische Spannungen mit sich bringen kann. Beim erfindungsgemäßen Verfahren dringt das Silizium jedoch nur sehr langsam ein, was eben diese "Überhitzung" vermeidet.

Dadurch, daß das Spendersilizium den Oberflächenabschnitten des Grünkörpers entsprechend geformt und auf diesen aufgelegt wird, ist eine optimale Infiltrierung aufgrund der Flächendeckung möglich. Die Formgebung des Spendersilizium-Formkörpers kann hierbei entsprechend den Strukturen des Grünkörpers derart erfolgen, daß das Silizium in derjenigen Menge an demjenigen Ort zur Verfügung steht, in der bzw. an dem es benötigt wird. Es ist also nicht mehr wie bisher nötig, das Spendersilizium im Überschuß vorzusehen, um das Aufsteigen (über einen Docht oder direkt) in den Grünkörper sicherzustellen. Man kann vielmehr sehr viel gezielter als bisher, falls gewünscht auch inhomogen in Bezug auf die Menge des Siliziums pro Volumeneinheit des Grünkörpers infiltrieren.

Das Bilden der die Spendersiliziumpartikel umhüllenden Schalen kann entweder in an sich bekannter Weise durch einfaches Mischen des Siliziumpulvers bzw. des Siliziumgranulats mit einem Bindemittel enthaltenden Kohlenstoff geschehen, wobei beim späteren Aufheizen bis etwa 1000°C das Bindemittel verkokt und eine poröse bzw. rissige Kohlenstoffschicht bildet. Beim weiteren Erhitzen und Schmelzen des Siliziums bei 1405°C reagiert diese Kohlenstoffschicht zu einer festen und praktisch unschmelzbaren Siliziumkarbidschicht auf dem Siliziumgranulat. Das schmelzflüssige Silizium innerhalb des Granulats tropft dann durch die rissige Siliziumkarbid-Außenhaut auf den zu infiltrierenden Grünkörper und dringt dann in diesen ein. Das Durchdringen dieser porösen Schalen verzögert aber den gesamten Vorgang, so daß das Spendersilizium dem Grünkörper nur langsam zugeführt wird und somit von diesem langsam aufgenommen werden kann. Diese poröse Schicht kann auch auf andere Weise gebildet werden. Z. B. kann Kohlenstoff durch physikalische oder chemische Gasphasenabscheidung oder auch in Form von Ruß direkt auf den einzelnen Siliziumkörnern abgelagert werden. Es ist weiterhin möglich, direkt Siliziumkarbid auf die Außenfläche der Siliziumpartikel über Harze oder Polymere aufzubringen.

Vorzugsweise wird als Bindemittel Phenolharz, Cellulose oder Polyurethan verwendet. Es ist weiterhin auch möglich, wässrige Dispersionen auf einer Basis von Vinylacetat, Polyurethan, Silikon oder dergleichen zu verwenden. Diesem Bindemittel wird der Kohlenstoff vorzugsweise in Form von Flammruß und (oder) Graphit zugemischt. Das Siliziumgranulat wird mit diesem Bindemittel in einem Mischer vermischt.

Danach wird das so beschichtete Siliziumgranulat bei Temperaturen zwischen 50° und 200°C getrocknet, so daß das Bindemittel aushärtet. Vorzugsweise geschieht die Trocknung derart, daß das beschichtete Siliziumgranulat schüttfähig ist. Bei einer anderen, besonders bevorzugten Ausführungsform des Verfahrens wird das beschichtete Siliziumgranulat in Formen gefüllt und in diesen getrocknet und ausgehärtet. Die Formen sind dem zu bearbeitenden Grünkörper derart angepaßt, daß der in der Form ausgehärtete Spendersilizium-Formkörper nach dem Herausnehmen aus der Form dem Grünkörper von seiner Form her angepaßt ist. Dadurch ist sichergestellt, daß beim Schmelzen des Siliziums dieses nach unten tropfend auf den Grünkörper gelangt. Man kann also beispielsweise zur Silizierung eines großen Rohres die Rohrkontur als Spendersilizium-Formkörper nachbilden und diesen Formkörper dann auf das Rohr und einen entsprechend anders geformten Formkörper in das Rohr hineinlegen.

Der Spendersilizium-Formkörper kann nicht nur in seiner unteren Kontur der Oberflächenkontur des Grünkörpers angepaßt werden, er kann vielmehr auch in seiner Dicke dem Siliziumbedarf des darunterliegenden Grünkörpers entsprechen. Wenn beispielsweise eine ebene Platte mit Verstärkungsrippen hergestellt werden soll, wird man den Spendersilizium-Formkörper an den Stellen dicker ausbilden, an welchen die Rippen sitzen, um die dort erhöhten Siliziummengen zur Verfügung stellen zu können. Weiterhin kann man die Dicke des Spendersilizium-Formkörpers so variieren, daß der Grünkörper an manchen Stellen mit weniger Silizium infiltriert wird als an anderen Stellen, um dadurch bestimmte Materialeigenschaften zu erzielen.

Die Bildung des Spendersilizium-Formkörpers kann auch derart geschehen, daß der Grünkörper direkt mit Spendersilizium beschichtet wird, indem man beispielsweise eine klebrige Binder-Schicht auf den Grünkörper aufträgt und mit dem Spendersilizium-Granulat belegt bzw. bestäubt. Weiterhin ist es auch möglich, die noch weiche Mischung aus Spendersilizium mit Bindemittel aufzustreichen, aufzuspritzen oder aufzuspachteln. Insbesondere sind die beiden vorgenannten Verfahren dann besonders vorteilhaft, wenn sehr dünne Grünkörper-Flächenelemente bearbeitet werden sollen. Schließlich ist es bei einer weiteren Ausführungsform der Erfindung vorgesehen, den Spendersilizium-Formkörper direkt an den Grünkörper anzugießen, also den Grünkörper in eine entsprechend ausgebildete Form zu legen, die Platz läßt für das anzugießende Spendersilizium.

Das Erhitzen des Grünkörpers mit aufgelegtem Spendersilizium geschieht vorzugsweise in einem Vakuumofen. Hierzu wird der Grünkörper auf Stützelemente aufgelegt. Er hat also keinen direkten Kontakt zum Ofen. Die Stützelemente sind vorzugsweise mit einer derart passivierten Oberfläche versehen, daß Silizium von dieser leicht abtrennbar ist. Eine solche Passivierung kann beispielsweise durch Bornitrit erreicht werden. Die Stützelemente sind weiterhin so angeordnet, daß eine durch die Ausdehnung beim Aufheizen bedingte Relativbewegung zwischen den Stützelementen und dem Grünkörper oder aber zwischen den Stützelementen und einer Auflagefläche im Ofen ermöglicht wird.

Das Spendersilizium kann auch bei Bedarf in gemischter Form vorliegen, also zum einen als vorgeformter und dem Grünkörper angepaßter Spendersilizium-Formkörper, andererseits als (beschichtetes) Granulat, je nach dem, wie dies die Form des Grünkörpers erfordert.

Wenn der Grünkörper mit aufgelegtem Spendersilizium aufgeheizt wird und das Silizium seine Schmelztemperatur erreicht, reagiert es mit der "Kohlenstoffschale" der Körner unter Bildung von Siliziumkarbid. Das schmelzflüssige Silizium innerhalb des Granulats tropft dann durch die rissige Siliziumkarbid-Außenhaut auf und dann in das zu infiltrierende Bauteil. Nach der Infiltration und Abkühlung sind die zurückgebliebenen hohlen Siliziumkarbid-Schalen auf der Bauteiloberfläche leicht zu entfernen.

Die Vorteile des erfindungsgemäßen Verfahrens gegenüber dem bisher üblichen Verfahren liegen insbesondere in folgenden Punkten:
- das zu infiltrierende Bauteil (der Grünkörper) kann im Ofen bezüglich seines Ausdehnungsverhaltens definiert gelagert werden;
- eine definierte Silizium-Bemessung ist bei Bauteilen unterschiedlicher (inhomogener) Wandstärken bzw. komplexer/integraler Formen ohne Silizium-Überschuß möglich;
- die Prozeßsicherheit wird bei der Chargierung im Ofen erhöht, wobei keine Verklebung der Bauteile (wie beim Dochtverfahren) mit einem Tiegel geschehen kann, da ein Herunterfallen von Silizium nicht mehr möglich ist;
- der Nachbearbeitungsaufwand der fertig infiltrierten Bauteile ist minimal, da die Schlacken leicht entfernbar sind;
- es ergibt sich eine Streckung des Infiltrations- und Reaktionsfensters (die Bildung von Siliziumkarbid ist ja ein exothermer Prozeß) bezüglich Zeit und Temperatur, was insbesondere bei großen und/oder dickwandigen Bauteilen oder bei Bauteilen mit variabler Wandstärke sowie bei der Fügung von Einzelsegmenten von großem Vorteil ist;
- durch die formschlüssige Anpassung der Spendersilizium-Formkörper an die Bauteiloberflächen wird die Prozeßsicherheit weiter erhöht;
- es gibt praktisch keine Höhenlimitierung für die zu infiltrierenden Bauteile, da keine kapillare Saugwirkung notwendig ist, um das Silizium von unten nach oben in den Grünkörper hineinzutransportieren;
- es kann eine Dosierung bzw. eine Zuführung von Silizium von oben und auch innerhalb des (hohlen) Bauteils erfolgen;
- die Werkstoffhomogenität wird erheblich verbessert, da eine gezielte lokale Siliziumbemessung vorgenommen werden kann.

Da der Infiltrationsprozeß schwindungsfrei abläuft, der Grünkörper also seine Form nicht verändert, kann die Endbearbeitung (Schleifen mit Diamantwerkzeugen, Erodieren, Sandstrahlen oder dergleichen) der nach der Silizierung sehr harten und verschleißbeständigen C/SiC-Komponenten bzw. genutzten Funktionsflächen des Bauteils auf ein Minimum reduziert werden.

An dieser Stelle sei noch ausdrücklich betont, daß mit dem erfindungsgemäßen Verfahren natürlich nicht nur Grünkörper aus reinem Kohlenstoff mit Silizium infiltriert werden können, sondern auch solche, die aus anderen Stoffen bestehen bzw. solche enthalten.

## Patentansprüche

1. Verfahren zur Herstellung silizierter Formkörper, wobei mindestens teilweise poröse Grünkörper aus Kohlenstoff, insbesondere aus kohlenfaserverstärktem Kohlenstoff, mit flüssigem Silizium unter Sauerstoffabschluß infiltriert werden,
**gekennzeichnet durch**
die Schritte:
a) Herstellen eines flüssigen und/oder klebrigen Bindemittels, welches aushärtbar ist und mit Kohlenstoff dotiert wird;
b) Beschichten von Partikeln oder Gruppen von Partikeln eines Silizium-Pulvers oder Silizium-Granulats mit dem Bindemittel zur Herstellung von Spendersilizium;
c) Formen des Spendersiliziums entsprechend Oberflächenabschnitten des Grünkörpers zur Herstellung von Spendersilizium-Formkörpern;
d) Trocknen und/oder Aushärten der Spendersilizium-Formkörper;
e) Auflegen der Spendersilizium-Formkörper auf den Grünkörper;
f) Aufheizen des Grünkörpers mit aufgelegten Spendersilizium-Formkörpern auf Temperaturen, bei denen Silizium schmilzt und darüber hinaus, bis der Kohlenstoff mit dem Silizium unter Bildung von Siliziumkarbid reagiert;
g) Infiltrieren des Grünkörpers mit Spendersilizium, das aus den Spendersilizium-Formkörpern nach unten auf den Grünkörper fließt.

2. Verfahren nach Anspruch 1, wobei die Schritte a) und b) durch einen Schritt ersetzt werden, in welchem die Partikel mit einer porösen, für flüssiges Silizium durchlässigen Schicht aus einem Material überzogen werden, welches der Schmelztemperatur von Silizium gegebenenfalls nach vorheriger Reaktion mit dem Silizium eine zum im wesentlichen formstabilen Halten der porösen Schicht hinreichende Festigkeit aufweist.

3. Verfahren nach Anspruch 1,
**dadurch gekennzeichnet,**
**daß** im Schritt a) dem Bindemittel Kohlenstoff in Form von Flammruß und/oder Graphit zugemischt wird.

4. Verfahren nach Anspruch 1,
**dadurch gekennzeichnet,**
**daß** als Bindemittel Phenolharz, Cellulose, Polyurethan, eine wässrige Dispersion auf der Basis Phenylacetat, Polyurethan oder Silikon oder Mischungen hiervon verwendet werden.

5. Verfahren nach Anspruch 1,
**dadurch gekennzeichnet,**
**daß** im Schritt d) der Spendersilizium-Formkörper bei erhöhter Temperatur, vorzugsweise bei 50°C bis 200°C getrocknet und/oder ausgehärtet wird.

6. Verfahren nach Anspruch 1,
**dadurch gekennzeichnet,**
**daß** im Schritt c) die Spendersilizium-Formkörper mittels behälterartiger Formen separat gebildet oder an den Grünkörper angegossen werden oder daß der Grünkörper mit Spendersilizium und Bindemittel beschichtet wird.

7. Verfahren nach Anspruch 1,
**dadurch gekennzeichnet,**
**daß** im Schritt e) Spendersilizium-Formkörper auf von oben zugängliche Flächen des Grünkörpers gelegt werden.

8. Verfahren nach Anspruch 1,
**dadurch gekennzeichnet,**
**daß** im Schritt e) ein für den betreffenden Abschnitt des Grünkörpers entsprechende Mengen an Silizium enthaltender Spendersilizium-Formkörper auf den Abschnitt aufgelegt wird.

9. Verfahren nach Anspruch 8,
**dadurch gekennzeichnet,**
**daß** die Menge einer Materialdicke des Abschnitts angepaßt wird.

10. Verfahren nach Anspruch 8,
**dadurch gekennzeichnet,**
**daß** die Menge einem gewünschten Silizierungsgrad des Abschnitts angepaßt wird.

11. Verfahren nach Anspruch 1,
**dadurch gekennzeichnet,**
**daß** die Temperatur im Schritt f) 1400°C bis 2100°C beträgt.

12. Verfahren nach Anspruch 1,
**dadurch gekennzeichnet,**
**daß** im Schritt f) der Grünkörper auf Stützelemente mit einer derart passivierten Oberfläche.aufgelegt wird, daß Silizium von dieser leicht abtrennbar ist.

13. Verfahren nach Anspruch 1,
**dadurch gekennzeichnet,**
**daß** im Schritt f) der Grünkörper derart auf Stützelemente aufgelegt wird, daß eine durch Ausdehnung beim Aufheizen bedingte Relativbewegung zwischen den Stützelementen und dem Grünkörper oder zwischen den Stützelementen und einer Auflagefläche ermöglicht wird.

14. Verfahren nach Anspruch 1,
**dadurch gekennzeichnet,**
**daß** im Schritt e) zur Herstellung von Formkörpern mit nach außen offenen Hohlräumen Spendersilizium-Formkörper in die Hohlräume eingelegt oder eingepaßt werden.

## Claims

1. A method of producing siliconised mouldings, wherein at least partly porous green bodies consisting of carbon, in particular of carbon-fibre reinforced carbon, are infiltrated with liquid silicon under oxygen exclusion,
**characterised by**
the steps:
a) preparing a fluid and/or sticky binder which can be cured and is doped with carbon;
b) coating particles or groups of particles of a silicon powder or silicon granulate with the binder to produce donor silicon;
c) moulding the donor silicon in accordance with surface portions of the green body to produce donor silicon mouldings;
d) drying, and/or curing the donor silicon mouldings;
e) placing the donor silicon mouldings on the green body;
f) heating the green body with donor silicon mouldings placed thereon to temperatures at which silicon melts and beyond until the carbon reacts with the silicon to form silicon carbide;
g) infiltration of the green body with donor silicon which flows downwards from the donor silicon mouldings on to the green body.

2. A method according to Claim 1, wherein the steps a) and b) are replaced by a step in which the particles are coated with a porous layer which is permeable to liquid silicon and which consists of a material which has the melting temperature of silicon, optionally after being previously reacted with the silicon, and sufficient strength for substantially dimensionally stable retention of the porous layer.

3. A method according to Claim 1, **characterised in that** in step a) carbon in the form of lampblack and/or graphite is added to the binder.

4. A method according to Claim 1, **characterised in that** phenol resin, cellulose, polyurethane, an aqueous dispersion based on phenyl acetate, polyurethane or silicone or mixtures thereof are used as binder.

5. A method according to Claim 1, **characterised in that** in step d) the donor silicon moulding is dried and/or cured at high temperature, preferably at 50°C to 200°C.

6. A method according to Claim 1, **characterised in that** in step c) the donor silicon moulding is formed separately by container-like moulds or are cast on the green body, or **in that** the green body is coated with donor silicon and binder.

7. A method according to Claim 1, **characterised in that** in step e) donor silicon mouldings are placed on surfaces of the green body which are accessible from above.

8. A method according to Claim 1, **characterised in that** in step e) a donor silicon moulding containing amounts of silicon appropriate for the relative portion of the green body is placed on the portion.

9. A method according to Claim 8, **characterised in that** the amount is adapted to the material thickness of the portion.

10. A method according to Claim 8, **characterised in that** the amount is adapted to a desired degree of siliconisation of the portion.

11. A method according to Claim 1, **characterised in that** the temperature in step f) is 1400°C to 2100°C.

12. A method according to Claim 1, **characterised in that** in step f) the green body is placed on support elements having a surface passivated in such a way that silicon can be easily separated therefrom.

13. A method according to Claim 1, **characterised in that** in step f) the green body is placed on support elements in such a way that a relative movement, caused by expansion during heating, is made possible between the support elements and the green body or between the support elements and the contact area.

14. A method according to Claim 1, **characterised in that** in step e), to produce mouldings with outwardly open cavities, donor silicon mouldings are inserted or fitted into the cavities.

## Revendications

1. Procédé de fabrication de corps moulés silicés, dans lequel des corps verts au moins en partie poreux en carbone, en particulier en carbone renforcé par des fibres de carbone, sont infiltrés par du silicium liquide sous exclusion d'oxygène, **caractérisé par** les phases :
a) préparation d'un liant liquide et/ou collant, qui est durcissable et dopé au carbone ;
b) revêtement de particules ou groupes de particules d'une poudre de silicium ou d'un granulat de silicium par le liant pour la préparation de silicium donneur ;
c) moulage du silicium donneur conformément à des sections superficielles du corps vert pour la fabrication de corps moulés de silicium donneur ;
d) séchage et/ou durcissement des corps moulés de silicium donneur ;
e) mise en place des corps moulés de silicium donneur sur le corps vert ;
f) chauffage du corps vert avec des corps moulés de silicium donneur mis en place à des températures auxquelles fond le silicium et au-delà, jusqu'à ce que le carbone réagisse avec le silicium en formant du carbure de silicium ;
g) infiltration du corps vert par du silicium donneur, qui s'écoule des corps moulés de silicium donneur vers le bas sur le corps vert.

2. Procédé suivant la revendication 1, dans lequel les phases a) et b) sont remplacées par une phase dans laquelle les particules sont revêtues d'une couche poreuse, perméable au silicium liquide, en un matériau qui présente à la température de fusion du silicium, éventuellement après réaction préalable avec le silicium, une résistance suffisante pour le maintien sensiblement à forme stable de la couche poreuse.

3. Procédé suivant la revendication 1, **caractérisé en ce que** du carbone sous forme de noir de carbone et/ou de graphite est ajouté au liant dans la phase a).

4. Procédé suivant la revendication 1, **caractérisé en ce que** de la résine phénolique, de la cellulose, du polyuréthanne, une dispersion aqueuse à base d'acétate de phényle, de polyuréthanne ou de silicone, ou des mélanges de ceux-ci, sont utilisés comme liant.

5. Procédé suivant la revendication 1, **caractérisé en ce que** le corps moulé de silicium donneur est séché et/ou durci à une température élevée, de préférence de 50°C à 200°C, dans la phase d).

6. Procédé suivant la revendication 1, **caractérisé en ce que**, dans la phase c), les corps moulés de silicium donneur sont formés séparément au moyen de moules en forme de récipients, ou sont coulés sur les corps verts, ou que le corps vert est revêtu de silicium donneur et de liant.

7. Procédé suivant la revendication 1, **caractérisé en ce que**, dans la phase e), des corps moulés de silicium donneur sont placés sur des surfaces du corps vert accessibles à partir du haut.

8. Procédé suivant la revendication 1, **caractérisé en ce que**, dans la phase e), un corps moulé de silicium donneur contenant des quantités de silicium appropriées pour la section concernée du corps vert est placé sur cette section.

9. Procédé suivant la revendication 8, **caractérisé en ce que** la quantité est adaptée à une épaisseur de matériau de la section.

10. Procédé suivant la revendication 8, **caractérisé en ce que** la quantité est adaptée à un taux souhaité de siliciuration de la section.

11. Procédé suivant la revendication 1, **caractérisé en ce que** la température est de 1400°C à 2100°C dans la phase f).

12. Procédé suivant la revendication 1, **caractérisé en ce que**, dans la phase f), le corps vert est placé sur des éléments d'appui ayant une surface passivée de telle sorte que du silicium peut être facilement séparé de celle-ci.

13. Procédé suivant la revendication 1, **caractérisé en ce que**, dans la phase f), le corps vert est placé sur des éléments d'appui de telle sorte qu'un mouvement relatif dû à la dilatation lors du chauffage est permis entre les éléments d'appui et le corps vert ou entre les éléments d'appui et une surface d'appui.

14. Procédé suivant la revendication 1, **caractérisé en ce que**, dans la phase e), des corps moulés de silicium donneur sont insérés ou encastrés dans les espaces creux pour la fabrication de corps moulés ayant des espaces creux ouverts vers l'extérieur.
